# EUROPEAN PATENT SPECIFICATION

(11) **EP 3 278 034 B1**
(45) Date of publication and mention of the grant of the patent: **27.01.2021**
(21) Application number: 16773564.6
(22) Date of filing: 04.03.2016
(51) Int. Cl.: F24F 12/00, F24F 11/00, F24F 110/40, F24F 140/40

(54) **METHOD FOR ACTIVE MIXING AT AN AIR HANDLING UNIT**
VERFAHREN ZUR AKTIVEN MISCHEN AN EINER LÜFTUNGSEINHEIT
PROCÉDÉ POUR MÉLANGE ACTIF AU NIVEAU D'UNE UNITÉ DE TRAITEMENT DE L'AIR

(30) Priority: 02.04.2015 SE 1550403
(43) Date of publication of application: 07.02.2018
(73) Proprietor: FläktGroup Sweden AB, 551 84 Jönköping (SE)
(72) Inventor: BJÄRKLEV, Johan, 55439 Jönköping (SE); ISAKSSON, Robert, 56597 Bottnaryd (SE)
(74) Representative: Curo AS
(86) International application number: PCT/SE2016/050170
(87) International publication number: WO 2016/159857

(56) References cited:
- EP-A2- 2 135 011
- WO-A1-89/05947
- WO-A1-89/07738
- WO-A1-2008/085115
- WO-A1-2014/110116
- US-A- 4 841 733
- US-A- 4 841 733
- US-A1- 2006 130 502
- US-A1- 2007 289 322
- US-A1- 2010 057 258
- US-A1- 2011 168 793
- US-A1- 2011 172 831

## Description

### Technical field

Present invention relates to a method for controlling the pressure balance and mixing flow at a mixing section for admixture of exhaust air into the supply air, a so called mixing function at an air handling unit.

### Background of the invention

In air treatment technology exists various solutions where an air handling unit is equipped with a mixing function, in order to partly transfer more heat or cold and possibly moisture than can be recovered through various types of heat recovery devices, between exhaust air and supply air flow, but also to save fan energy. The latter, by the exhaust fan speed is down regulated as the exhaust air is guided to / mixed into the supply air. Depending on the field of use of the air treatment plant, exists also requirements of that the supply air to the premises, that the air handling unit serves, contains a certain amount of fresh air (outside air), but there are also facilities where 100% return air may be used, at least for limited periods.

Known solutions of an air handling unit, arranged in similar way as according to the invention, comprises one exhaust air side and one supply air side, where the exhaust air side in the exhaust air flow direction normally comprises one exhaust air filter, after this a mixing section, followed by a heat exchanger, after the heat exchanger a speed-controlled suction exhaust air fan with some kind of flow measurement device and finally an on/off-type extract air damper. The supply air side in turn comprises in the supply air flow direction first a controllable outdoor air damper, then an outdoor air filter, followed by the heat exchanger, thereafter followed by the mixing section and finally a speed-controlled suction supply air fan with a flow measurement device and eventually some kind of heater and/or cooler. The mixing section comprises a controllable mixing damper which is arranged to partly open or close an opening between exhaust air and supply air. A known solution of a mixing device is presented in EP 2135011 and discloses that the mixing damper and the outdoor air damper are controlled individually in sequence such that the mixing damper first opens to a wanted degree of opening, whereby the outdoor air damper is fully open, and when the mixing damper is fully open, the outdoor air damper is arranged to have a wanted degree of opening to balance the need of outdoor air and added exhaust air. Through a number of therefore arranged sensors and a control and monitoring system, the mixing process is handled. This system manages indeed energy consumption in a wise manner, but unfortunately it have shortcomings regarding the flow direction and the magnitude of the flow initially at start of the mixing, i.e. during a time while the mixing damper starts to open and the outdoor air damper is open, since there is no control of the flows and pressures around the mixing damper, before the mixing process starts. Thus there is a risk that the flow through the mixing section flows in a wrong direction and/or that there is no control of the magnitude of the mixing flow. Another known solution secures indeed the flow direction of the mixing flow by controlling the pressures around the mixing damper and secure negative pressure in the supply air, by controlling an outdoor air damper, but this solution has no control of the amount of airflow since the pressure drop over the mixing damper can be huge, especially initially at the start of the mixing sequence, depending on the actual operating point. If the negative pressure on the supply air side is big when the mixing damper opens, there is a high and uncontrolled flow of exhaust air to the supply air, which is not optimal.

### Disclosure of the invention

With the present invention the object is achieved to solve the above presented problems by a method at an air handling unit according to the preamble of claim 1, where after indication of a need of admixture of exhaust air into the supply air, for example a need of increased heating, firstly the pressure balance around the mixing damper is controlled and secured as correct. To achieve a complete control of that the air will flow through the mixing damper from the exhaust air side to the supply air side, a positive pressure must be present on the exhaust air side of the mixing damper in relation to the pressure on the supply air side of the same. In addition, it should be verified that the positive pressure is not too large because the mixing flow may then become uncontrollably large before the mixing ratio has been stabilized. According to the invented method it is insured that before the mixing is started, the positive pressure on the exhaust air side in relation to the supply air side only is slightly higher than 0 Pa, namely that a pressure drop over the mixing chamber is Δp > 0 and between a-b ≤ Δp ≤ a+b Pa, where a is a selectable setpoint and b is a selectable range value, which also takes into account the measurement uncertainty. The respective value of "a" and "b" is larger than 0. When actual pressures are registered will either the exhaust air damper or the outdoor air damper be used to adjust to correct pressure balance over the mixing damper. Prior art solutions use only control of the pressure balance with use of the outdoor air damper, why the mixing flow initially can be uncontrolled and too large. The present method also has the possibility to use an exhaust air damper. Depending on how the pressure balance situation is can either the pressure on the outdoor air side or on the exhaust air side be adjusted to balance the pressure to fall within the selectable and predetermined range. The balancing process continues until the above mentioned differential pressure criteria are achieved, or until a predetermined time for the balancing process expired, after this the balancing is stopped and the mixing can start. The mixing process takes place by that the mixing damper and the outdoor air damper operates in counter-phase, whereby the mixing damper opens towards a wanted mixing amount at the same time as the outdoor air damper closes to a wanted value. In parallel with the control of the dampers the exhaust air fan secures the correct exhaust air flow by speed-control. By the above described method full control is achieved of both the direction of the mixing flow and the amount of exhaust air also in the initial phase, why a controlled and soft start of the mixing is achieved and which mixing can continue to the wanted degree of mixing in a controlled manner by regulating the mixing damper and the outdoor air damper.

According to a preferred embodiment of the method the mixing of the exhaust air flow via the mixing damper to the supply air is limited by a criterion for a minimum outdoor air flow, to ensure air quality in the premises. There may be a requirement for a certain part of the supply air flow still includes a certain amount of fresh air/outdoor air, why outdoor air flow is calculated by measuring the pressure drop across the heat exchanger. In this case, the requirement of outdoor air flow can be a value of the volume flow per time unit or for instance a percentage value. The mixing process works in the same way as described above, but adding that this limitation is present, which stops an increased admixture of the exhaust air in a certain point. This ensures that a certain amount of fresh air is added to the supply air despite warranted need for return air.

In a further alternative embodiment, to check that the supply air, despite admixture of exhaust air, has a certain air quality, the exhaust air quality is measured by an air quality sensor. This may be a carbon dioxide sensor or the like, which provides a measure of the air in a premise needs more fresh air/outdoor air. In this case the air quality is "overriding" the admixture of the exhaust air into the supply air via the mixing damper, wherein a restriction of the mixing ratio is obtained.

According to a preferred embodiment, the method comprises a protection function, which on increasing admixture of exhaust air into the supply air, prevents the exhaust fan to enter the so-called "pumping area". Since, what normally is called the exhaust fan, manages the flow of air on the exhaust side of the air handling unit, means an increased amount of exhaust admixture into the supply air that the extract air decreases. In other words, to save operating power, the exhaust fan speed is reduced through the control and monitoring system as the mixing damper opens for increased admixture of the exhaust air, wherein the fan operating point moves in the fan chart. The pressure is principally of the same order, but possibly somewhat lower, while the flow of the fan is reduced, wherein the operating point so to speak moves to the left in a normal pressure/flow chart of the fan. When the operating point risks falling outside the specific fan's working area so called pumping may occur, but this is avoided by the protection function which stops the fan when this occurs. At the same time also the exhaust air damper closes to prevent air from being sucked in via the exhaust side.

### Short description of the figure

The following schematic principle figure is showing:

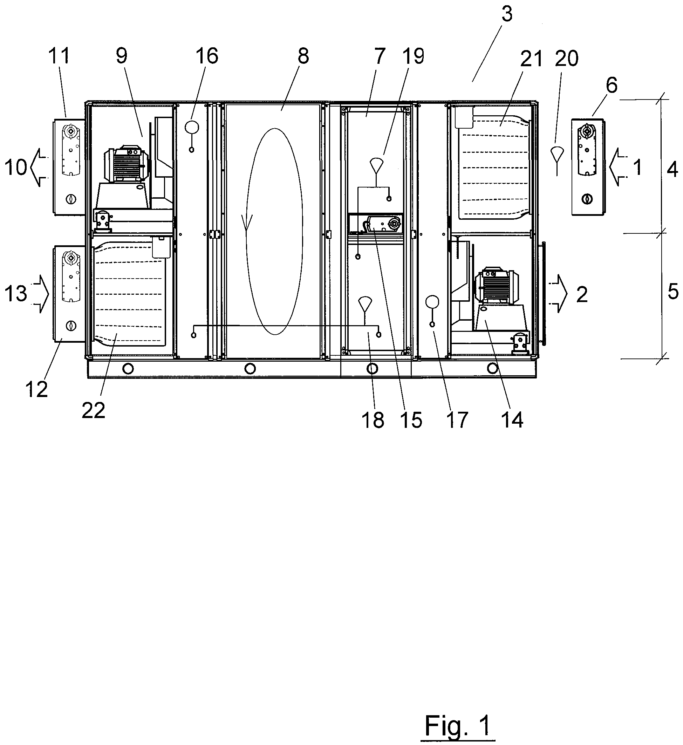

- Fig.1 is showing an example of an air handling unit arranged for the mixing method according to the invention.

The constructive design of the present invention is set clear in the following detailed description of an embodiment of the invention with reference to the accompanying drawing showing a preferred but not limiting embodiment of the invention.

### Detailed description of the figure

**Fig.1** shows a principal picture of an air handling unit 3, arranged for controlled admixture of a subset of exhaust air flow 1 into a supply air flow 2. The air handling unit 3 comprises an exhaust air side 4, in the figure the upper part of the unit, and a supply air side 5, in the figure the lower part of the unit. The exhaust air side 4 comprises in the air flow direction first an exhaust air damper 6, which not must be mounted on the air handling unit 3, but can as well be arranged in an exhaust air duct (not shown). The exhaust air damper 6 is primarily used for control of the pressure of the exhaust air 1 after the exhaust air damper 6. Further in the exhaust air flow direction usually an exhaust air filter 21 is passed and a mixing section 7, which mixing section 7 comprises a mixing damper 15 arranged to open and close a passage between the exhaust air flow 1 and the supply sir flow 2, i.e. arranged for a mixing function. After this the air passes a heat exchanger 8, which in this case is exemplified with a rotating heat exchanger, which heat exchanger 8 is arranged to exchange energy and, depending on type of heat exchanger, eventual moisture between the exhaust air side 4 and the supply air side 5. The air that passed the heat exchanger 8 is named extract air 10, and the air stream is driven through a speed-controlled exhaust air fan 9, which is arranged in the extract air 10. The flow through the exhaust air fan 9 is measured with some kind of flow measurement device, either integrated in the exhaust air fan 9 or as a separate device, and this is exemplified in the figure with a first flow meter 16. Before the extract air 10 is led out in the free it passes an extract air damper 11, which in this case is a two-position damper, with so-called on/off-function, i.e. either open or closed. The supply air side 5 comprises in the air flow direction first an outdoor air damper 12, which can be arranged either on the air handling unit 3 or in an outdoor air duct (not shown), and which outdoor air damper 12 is used for control the pressure after the outdoor air damper 12 in the outdoor air flow 13. After this the outdoor air 13 passes an outdoor air filter 22 and the heat exchanger 8. After the heat exchanger 8 the air is instead named supply air, wherein the supply air flow 2 passes the mixing section 7 followed by a speed-controlled supply air fan 14, which drives the supply air flow 2. In the supply air flow 2 or integrated with the supply air fan 14 is some kind of flow measurement device arranged and is here symbolized with a second flow meter 17. After the supply air fan 14 the supply air flow 2 continues in a supply air duct (not shown) to the premise/premises which shall be ventilated by the air handling unit 3. The mixing section 7 comprises as said the mixing damper 15 for admixture of exhaust air flow 1 into the supply air flow 2 and the air handling unit 3 also comprises at least one first pressure sensor 18 for measurement of a first pressure drop Δp₁ over the heat exchanger 8 and at least one second pressure sensor 19 for measurement of a second pressure drop Δp₂ over the mixing damper 15. Further there may be included an air quality sensor 20 of some kind in the exhaust air flow 1, alternatively in the ventilated premises, for example a carbon dioxide sensor or the like, depending on whether the plant uses air quality as indicator of the wanted amount of fresh air present in the supply air flow 2, when admixture of exhaust air flow 1 is used for increased recovery. To control the amount of outdoor air 13 (fresh air) the first pressure drop Δp₁ over the heat exchanger 8 is used to calculate the outdoor air flow 13. To handle the functionality of the air handling unit 3 including the mixing function is also a control and monitoring system included for registration of measurement parameters and for control of the fans 9, 14, the dampers 6, 11, 12, 15, the heat exchanger 8, etc.

At indicated need of mixing, for example increased need of heat recovery to keep the correct supply air temperature, indicated for example by a temperature sensor (not shown), the control system starts to check the pressure set up over the mixing damper 15. A criterion that has to be fulfilled before mixing can start is that a certain positive pressure must prevail on the exhaust air side 4 of the mixing damper 15 in relation to the supply air side 5 of the same. The criterion means that the second pressure drop Δp2 over the mixing damper 15 must be greater than 0 Pa and at most equal to a selectable and preset set value a plus/minus a selectable interval b, the later mainly with respect to measurement uncertainty. Clarified this means that if for example a = 10 Pa the second pressure drop Δp₂ over the mixing damper 15 shall be greater than 0 Pa and at most 10 Pa, but because of that pressure sensors have a certain measurement inaccuracy and that the pressure can fluctuate there should also be set an interval value b, which allows the value to "float" around the a value. So if b = 9 mixing can start if Δp₂ is greater than 0 Pa and is around 10 Pa namely within 1-19 Pa. The values of "a" and "b" can vary depending on actual pressures etc. If positive pressure is at hand on the exhaust air side and the second pressure drop Δp₂ over the mixing damper 15 is greater than given by the value a + the interval b, the exhaust air damper 6 will close slightly, at the same time as the exhaust air fan 9 starts to slightly speed up to maintain the wanted air flow. By the throttling at the exhaust air damper 6 the positive pressure on the exhaust air side 4 of the mixing damper 15 will decrease, until the criterion is fulfilled. Opposite, if the pressure on the supply air side 5 of the mixing damper 15 is too high, i.e. there is a positive pressure on the supply air side 5, the outdoor air damper 12 will start to close until the second pressure drop Δp₂ over the mixing damper 15 is greater than 0 Pa and is within the interval a-b ≤ Δp₂ ≤ a+b Pa. Only when the balancing is performed and has been completed and the second pressure drop Δp₂ is the correct is the mixing process started. As mentioned above it is thereby secured that when the mixing damper 15 as well starts to open the air will flow in the right direction and the airflow will not be uncontrollably large, as in prior art solutions. Alternatively the mixing is started when a predetermined time for the balancing has expired. The following mixing is conducted by that the mixing damper 15 and the outdoor air damper 12 opens respective closes in parallel in opposite phase, to a wanted opening degree, to obtain a desired mixing ratio. The mixing ratio can be limited by either one criterion for outdoor air content specified as a volume flow per unit time or a percentage of the supply airflow. Outdoor air flow 13 is calculated as mentioned above, based on the first pressure drop Δp₁ across the heat exchanger 8 and the supply airflow 2 is measured by the second flow meter 17. Alternatively, the mixing ratio can be controlled by the value of an air quality sensor 21. When the heat demand (or cooling demand and optionally moisture demand) increases, the mixing damper 15 will gradually open in parallel with that the outdoor air damper 12 closes accordingly. As more and more exhaust air flow is diverted to the supply air side 5, the outdoor air flow 10 is reduced by that the exhaust air fan 9 is gradually lowering its speed. When mixing damper 15 approaches the fully open position or becomes totally open the flow at the exhaust air fan 9 basically becomes zero. But there are problems by down regulating the fan speed with maintained or nearly maintained fan pressure, because the fan operating point "falls out of its working area, usually defined with a limiting function in the left part of a fan chart, which means that the fan enters the "pump area". To avoid pumping the control system switches off the exhaust fan 9 when its falls out of its defined and fan specific working area during the mixing process, and at the same time the extract damper 11 is closed to avoid backflow. The supply air fan 14 still delivers the set value supply air flow 2 during the complete process and no uncontrolled and misdirected air flow occurs during the mixing process.

### PARTS LIST

- 1 =: exhaust air flow
- 2=: supply air flow
- 3=: air handling unit
- 4=: exhaust air side
- 5=: supply air side
- 6=: exhaust air damper
- 7=: mixing section
- 8=: heat exchanger
- 9=: exhaust air fan
- 10=: extract air flow
- 11=: extract air damper
- 12=: outdoor air damper
- 13=: outdoor air flow
- 14=: supply air fan
- 15=: mixing damper
- 16=: first flow meter
- 17=: second flow meter
- 18=: first pressure sensor
- 19=: second pressure sensor
- 20=: air quality sensor
- 21=: exhaust air filter
- 22=: outdoor air filter

- (Δp₁) =: first pressure drop
- (Δp₂) =: second pressure drop

## Claims

1. Method for controlled admixture of a subset of exhaust air flow (1) into a supply air flow (2) at an air handling unit (3), which air handling (3) unit comprises an exhaust air side (4) and a supply air side (5), wherein the exhaust air side (4) in the air flow direction comprises an exhaust air damper (6) for control of the pressure of the exhaust air flow (1) after the exhaust air damper (6), one mixing section (7), one heat exchanger (8) for exchange of energy or for exchange of both energy and moisture between the exhaust air side (4) and the supply air side (5), one speed-controlled exhaust air fan (9) arranged in an extract air flow (10), and one extract air damper (11), and wherein the supply air side (5) in the air flow direction comprises an outdoor air damper (12) for control of the pressure in an outdoor air flow (13) after the outdoor air damper (12), the heat exchanger (8), the mixing section (7), and a speed-controlled supply air fan (14) arranged in the supply air flow (2), and the mixing section (7) comprises a mixing damper (15) for admixture of exhaust air flow (1) in the supply air flow (2), and further the air handling unit (3) comprises at least one first flow meter (16) for measuring of the extract air flow (10) and at least one second flow meter (17) for measuring of the supply air flow (2), at least one first pressure sensor (18) for measuring of a first pressure drop Δp₁ over the heat exchanger (8) on the supply air side (5) and at least one second pressure sensor (19) for measuring of a second pressure drop Δp₂ over the mixing damper (15), one control and monitoring system for registration of measurement parameters and control of fans (9, 14), dampers (6, 11, 12, 15), and heat exchanger (8), **characterized in that** the method comprises the following steps:
a) indication of needed admixture of exhaust air flow (1) into the supply air flow (2),
b) controlling and securing of positive pressure balance Δp₂ over the mixing damper (15), i.e. that the pressure is higher on the exhaust air side (4) of the mixing damper (15) than on the supply air side (5) of the same, with the criteria Δp₂ > 0 Pa and a-b ≤ Δp₂ ≤ a+b Pa, where a is a selectable set value and b is a selectable interval value and a > 0 and b > 0, and whereby the balancing is performed by controlling either the exhaust air damper (6) or the outdoor air damper (12), where which damper (6, 12) that is regulating is determined by the actual operating point, whereby if the second pressure drop is Δp₂ > a Pa + b Pa the exhaust air damper (6) will close slightly at the same time as the exhaust air fan (9) speeds up slightly to keep the wanted air flow, and if Δp₂ ≤ 0 Pa the outdoor air damper (12) will close slightly, until Δp₂ fulfils the criteria Δp₂ > 0 Pa and a-b ≤ Δp₂ ≤ a + b Pa,
c) the balancing is stopped when the criteria according to b) are fulfilled, or alternatively when a predetermined time for achieving correct pressure balance according to b) has expired,
d) the mixing is started whereby the mixing damper (15) opens at the same time as the outdoor damper (12) closes, i.e. the both dampers (15, 12) works in parallel and in opposite phase, until a desired mixing ratio is achieved, and in parallel the exhaust air fan (9) secures the correct flow in the exhaust air flow (1) by speed-control.

2. Method according to claim 1, **characterized in that** the admixture of the exhaust air flow (1) via the mixing damper (15) is limited by a criterion for a smallest outdoor air flow (13), which outdoor air flow (13) is calculated using the first pressure drop Δp₁ over the heat exchanger (8).

3. Method according to claim 1, **characterized in that** the admixture of the exhaust air flow (1) via the mixing damper (15) is limited by a criterion for air flow quality, through measurement by an air quality sensor (20), arranged in the exhaust air flow (1) or in a premises which is ventilated by the air handling unit (3).

4. Method according to any of the previous claims, **characterized in that** the exhaust air fan (9) is stopped and the extract air damper (11) is closed if the extract air flow (10) during the mixing process decreases below a fan specific limitation for the operating point, at which so called pumping otherwise might occur in the exhaust air fan (9).

## Patentansprüche

1. Verfahren zur gesteuerten Zumischung einer Teilmenge eines Abluftstroms (1) in einen Zuluftstrom (2) bei einer Lufthandhabungseinheit (3), welche Lufthandhabungseinheit (3) eine Abluftseite (4) und eine Zuluftseite (5) aufweist, wobei die Abluftseite (4) in der Luftstromrichtung einen Abluftdämpfer (6) zur Steuerung des Druckes des Abluftstroms (1) hinter dem Abluftdämpfer (6), eine Mischsektion (7), einen Wärmeaustauscher (8) zum Austauschen von Energie oder zum Austauschen von sowohl Energie als auch Feuchtigkeit zwischen der Abluftseite (4) und der Zuluftseite (5), ein geschwindigkeitsgesteuertes Abluftgebläse (9), das in einem Extraktionsluftstrom (10) angeordnet ist, und einen Extraktionsluftdämpfer (11) aufweist, und wobei die Zuluftseite (5) in der Luftstromrichtung einen Außenluftdämpfer (12) zur Steuerung des Druckes in einem Außenluftstrom (13) hinter dem Außenluftdämpfer (12), den Wärmeaustauscher (8), die Mischsektion (7) und ein geschwindigkeitsgesteuertes Zuluftgebläse (14) aufweist, das in dem Zuluftstrom (2) angeordnet ist, und die Mischsektion (7) einen Mischdämpfer (15) zur Zumischung von Abluftstrom (1) in den Zuluftstrom (2) aufweist, und wobei die Lufthandhabungseinheit (3) weiterhin zumindest einen ersten Durchflussmesser (16) zum Messen des Extraktionsluftstroms (10) und zumindest einen zweiten Durchflussmesser (17) zum Messen des Zuluftstroms (2), zumindest einen ersten Drucksensor (18) zum Messen eines ersten Druckabfalls Δp₁ über dem Wärmeaustauscher (8) auf der Zuluftseite (5) und zumindest einen zweiten Drucksensor (19) zum Messen eines zweiten Druckabfalls Δp₂ über dem Mischungsdämpfer (15), ein Steuerungs- und Überwachungssystem zur Registrierung von Messparametern und Steuerung von Gebläsen (9, 14), Dämpfern (6, 11, 12, 15) und Wärmeaustauscher (8) aufweist, **dadurch gekennzeichnet, dass** das Verfahren die folgenden Schritte aufweist:
a) Anzeigen von benötigter Zumischung von Abluftstrom (1) in den Zuluftstrom (2),
b) Steuern und Sichern von positiver Druckbilanz Δp₂ über dem Mischungsdämpfer (15), d.h., dass der Druck auf der Abluftseite (4) des Mischungsdämpfers (15) größer ist als auf der Zuluftseite (5) desselben, mit den Kriterien Δp₂ > 0 Pa und a-b ≤ Δp₂ ≤ a+b Pa, wobei a ein wählbarer eingestellter Wert und b ein wählbarer Intervallwert und a > 0 und b > 0 ist, und wodurch das Herstellen der Bilanz durch Steuern entweder des Abluftdämpfers (6) oder des Außenluftdämpfers (12) durchgeführt wird, wobei derjenige Dämpfer (6, 12), der gerade reguliert, durch den effektiven Arbeitspunkt bestimmt wird, wodurch, wenn der zweite Druckabfall Δp₂ > a Pa + b Pa ist, der Abluftdämpfer (6) zur selben Zeit geringfügig schließen wird wie das Abluftgebläse (9) geringfügig beschleunigt, um den gewollten Luftstrom aufrechtzuerhalten, und wenn Δp₂ ≤ 0 Pa ist, wird der Außenluftdämpfer (12) geringfügig schließen, bis Δp₂ die Kriterien Δp₂ > 0 Pa und a-b ≤ Δp₂ ≤ a+ b Pa erfüllt,
c) das Herstellen der Bilanz gestoppt wird, wenn die Kriterien gemäß b) erfüllt sind, oder alternativ, wenn eine vorbestimmte Zeit zum Erreichen eines korrekten Druckausgleichs gemäß b) verstrichen ist,
d) das Mischen gestartet wird, wodurch der Mischungsdämpfer (15) zur selben Zeit öffnet wie der Außendämpfer (12) schließt, d.h. die beiden Dämpfer (15, 12) parallel und in entgegengesetzter Phase arbeiten, bis ein gewünschtes Mischungsverhältnis erreicht ist, und parallel dazu das Abluftgebläse (9) den korrekten Strom in dem Abluftstrom (1) durch Geschwindigkeitskontrolle sichert.

2. Verfahren nach Anspruch 1, **dadurch gekennzeichnet, dass** die Zumischung des Abluftstroms (1) über den Mischungsdämpfer (15) durch ein Kriterium für einen kleinsten Außenluftstrom (13) begrenzt ist, welcher Außenluftstrom (13) unter Verwendung des ersten Druckabfalls Δp₁ über dem Wärmeaustauscher (8) berechnet wird.

3. Verfahren nach Anspruch 1, **dadurch gekennzeichnet, dass** die Zumischung des Abluftstroms (1) über den Mischungsdämpfer (15) durch ein Kriterium für Luftstromqualität begrenzt ist, mittels Messung durch einen Luftqualitätssensor (20), der in dem Abluftstrom (1) oder in Räumlichkeiten angeordnet ist, die durch die Lufthandhabungseinheit (3) belüftet werden.

4. Verfahren nach irgendeinem der vorhergehenden Ansprüche, **dadurch gekennzeichnet, dass** das Abluftgebläse (9) gestoppt und der Extraktionsluftdämpfer (11) geschlossen wird, wenn der Extraktionsluftstrom (10) während des Mischungsprozesses unter eine Gebläse-spezifische Grenze für den Arbeitspunkt abnimmt, an dem andernfalls in dem Abluftgebläse (9) ein sogenanntes Pumpen auftreten könnte.

## Revendications

1. Procédé pour réaliser un mélange actif de manière contrôlée d'une partie d'un flux d'air aspiré (1) dans un flux d'air entrant (2) dans une unité de traitement d'air (3), laquelle unité de traitement d'air (3) comprend un côté air aspiré (4) et un côté air entrant (5), dans lequel le côté air aspiré (4) comprend, suivant la direction du flux d'air, un organe d'étranglement d'air aspiré (6) pour un réglage de la pression du flux d'air aspiré (1) après l'organe d'étranglement d'air aspiré (6), une section de mélange (7), un échangeur de chaleur (8) pour un échange d'énergie ou pour un échange à la fois d'énergie et d'humidité entre le côté air aspiré (4) et le côté air entrant (5), un ventilateur d'air aspiré (9) à vitesse contrôlée disposé dans un flux d'air extrait (10), et un organe d'étranglement d'air extrait (11), et dans lequel le côté air entrant (5) comprend, suivant la direction du flux d'air, un organe d'étranglement d'air extérieur (12) pour un réglage de la pression dans un flux d'air extérieur (13) après l'organe d'étranglement d'air extérieur (12), l'échangeur de chaleur (8), la section de mélange (7) et un ventilateur d'air entrant (14) à vitesse contrôlée disposé dans le flux d'air entrant (2), et la section de mélange (7) comprend un organe d'étranglement de mélange (15) pour un mélange actif d'un flux d'air aspiré (1) dans le flux d'air entrant (2), et l'unité de traitement d'air (3) comprenant en outre au moins un premier débitmètre (16) pour mesurer le flux d'air extrait (10) et au moins un second débitmètre (17) pour mesurer le flux d'air entrant (2), au moins un premier capteur de pression (18) pour mesurer une première chute de pression Δp₁ d'un côté à l'autre de l'échangeur de chaleur (8) sur le côté air entrant (5) et au moins un second capteur de pression (19) pour mesurer une seconde chute de pression Δp₂ d'un côté à l'autre de l'organe d'étranglement de mélange (15), un système de réglage et de surveillance pour un enregistrement de paramètres de mesure et un réglage des ventilateurs (9, 14), des organes d'étranglement (6, 11, 12, 15) et de l'échangeur de chaleur (8), **caractérisé en ce que** le procédé comporte les étapes suivantes :
a) indication d'un mélange actif exigé de flux d'air aspiré (1) dans le flux d'air entrant (2),
b) réglage et maintien d'une différence de pression positive Δp₂ d'un côté à l'autre de l'organe d'étranglement de mélange (15), ce qui signifie que la pression est supérieure du côté air aspiré (4) de l'organe d'étranglement de mélange (15) que du côté air entrant (5) de ce dernier, avec le critère Δp₂ > 0 Pa et a-b ≤ Δp₂ ≤ a+ b Pa, a étant une valeur fixée sélectionnable et b étant une valeur d'intervalle sélectionnable et a > 0 et b > 0, ladite différence étant réalisée en réglant soit l'organe d'étranglement d'air aspiré (6), soit l'organe d'étranglement d'air extérieur (12), lequel organe d'étranglement (6, 12) qui assure la régulation étant déterminé par le point de fonctionnement momentané, alors que, si la seconde chute de pression Δp₂ est > a Pa + b Pa, l'organe d'étranglement d'air aspiré (6) va se fermer légèrement en même temps que le ventilateur d'air aspiré (9) augmente de vitesse légèrement afin de maintenir le flux d'air souhaité et, si Δp₂ ≤ 0 Pa, l'organe d'étranglement d'air extérieur (12) va se fermer légèrement, jusqu'à ce que Δp₂ remplisse les critères Δp₂ > 0 Pa et a- b ≤ Δp₂ ≤ a + b Pa,
c) le réglage de différence est arrêté lorsque les critères suivant b) sont remplis, ou, en variante, lorsqu'une durée préfixée pour obtenir une différence de pression correcte suivant b) est expirée,
d) le mélange est mis en marche, l'organe d'étranglement de mélange (15) s'ouvre en même temps que l'organe d'étranglement d'air extérieur (12) se ferme, ce qui signifie que les deux organes d'étranglement (15, 12) travaillent en parallèle et en phase opposée, jusqu'à ce qu'un rapport de mélange souhaité soit atteint, alors que, en parallèle, le ventilateur d'air aspiré (9) maintient le flux correct dans le flux d'air aspiré (1) par réglage de vitesse.

2. Procédé suivant la revendication 1, **caractérisé en ce que** le mélange actif du flux d'air aspiré (1) au moyen de l'organe d'étranglement de mélange (15) est limité par un critère pour un flux d'air extérieur (13) plus petit, lequel flux d'air extérieur (13) est calculé en utilisant la première chute de pression Δp₁ d'un côté à l'autre de l'échangeur de chaleur (8).

3. Procédé suivant la revendication 1, **caractérisé en ce que** le mélange actif du flux d'air aspiré (1) au moyen de l'organe d'étranglement de mélange (15) est limité par un critère pour une qualité de flux d'air, au moyen d'une mesure à l'aide d'un capteur de qualité d'air (20), disposé dans le flux d'air aspiré (1) ou dans un local dont la ventilation est assurée par l'unité de traitement d'air (3).

4. Procédé suivant l'une quelconque des revendications précédentes, **caractérisé en ce que** le ventilateur d'air aspiré (9) est mis à l'arrêt et l'organe d'étranglement d'air extrait (11) est fermé si le flux d'air extrait (10) pendant le processus de mélange diminue au-dessous d'une limitation spécifique de ventilateur pour le point de fonctionnement, auquel cas, sinon, ce qu'il est convenu d'appeler un pompage pourrait se produire sur le ventilateur d'air aspiré (9).
